(19) Europäisches Patentamt

European Patent Office

Office européen des brevets

(11) EP 4 682 836 A1

(12) **DEMANDE DE BREVET EUROPEEN**

(43) Date de publication:
21.01.2026 Bulletin 2026/04

(21) Numéro de dépôt: 25190523.8

(22) Date de dépôt: 18.07.2025

(51) Classification Internationale des Brevets (IPC):
**G06T 15/04** (2011.01)   **G06T 17/20** (2006.01)
**G06T 7/50** (2017.01)

(52) Classification Coopérative des Brevets (CPC):
**G06T 17/20; G06T 15/04;** G06T 2210/56;
G06T 2210/62

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **19.07.2024 FR 2408012**

(71) Demandeur: **Technodigit**
**69003 Lyon (FR)**

(72) Inventeur: **WENDLAND, David**
**01700 NEYRON (FR)**

(74) Mandataire: **Cabinet Boettcher**
**5, rue de Vienne**
**75008 Paris (FR)**

(54) **PROCEDE DE MODELISATION NUMERIQUE D'UNE SURFACE TRIDIMENSIONNELLE D'UN OBJET**

(57) Procédé de numérisation numérique d'une surface tridimensionnelle, comprenant les étapes de : déterminer des coordonnées de points sur la surface tridimensionnelle pour obtenir un nuage de points et capturer des images de la surface tridimensionnelle, construire par tétraédrisation un maillage de triangles sur le nuage de points, projeter le maillage sur les images et déterminer simultanément un paramètre d'opacité et un paramètre de texture des triangles en faisant coïncider au moins une partie des images et le maillage afin d'obtenir une ébauche de modèle tridimensionnel, comparer l'ébauche de modèle tridimensionnel aux images et vérifier une cohérence entre l'ébauche de modèle tridimensionnel et les images, revenir à la détermination des paramètres d'opacité et de texture des triangles si la cohérence est inférieure à une cohérence attendue, extraire la surface de l'ébauche de modèle pour former le modèle tridimensionnel dans le cas contraire.

FIG.2

EP 4 682 836 A1

## Description

La présente invention concerne le domaine de la modélisation numérique de surface tridimensionnelle.

ARRIERE PLAN DE L'INVENTION

Les modèles numériques tridimensionnels sont par exemple utilisés dans le domaine de la réalité virtuelle pour représenter des objets qu'un observateur peut visualiser aléatoirement selon différentes directions d'observation ou des lieux dans lesquels un observateur peut aléatoirement évoluer et promener son regard en restituant à l'observateur une impression de volume la plus proche possible de la réalité.

La réalisation d'un modèle numérique tridimensionnel d'un objet démarre généralement par la détermination de positions de points appartenant à la surface extérieure de l'objet pour obtenir un nuage de points et se poursuit par la détermination d'un maillage reliant ces points les uns aux autres. Le maillage terminé, une texture de la surface est extraite d'images de l'objet et appliquée au maillage. Les positions des points sont par exemple déterminées en utilisant un procédé de numérisation par projection d'un faisceau laser ou par projection d'une lumière structurée, ou par un procédé de photogrammétrie.

La détermination du maillage est par exemple réalisée par une triangulation de Delaunay consistant à effectuer un maillage à partir de triangles dont les sommets sont les points dont les positions ont été déterminées (on parle aussi de pavage ou *tessellation* en anglais) ou, pour les surfaces en volume, une « tétrahédrisation » consistant à effectuer un maillage à partir de tétraèdres ayant des faces triangulaires possédant des sommets coïncidant avec les points dont les positions ont été déterminées.

Une fois le maillage réalisé, les images de l'objet sont utilisées pour en extraire une texture qui sera appliquée à chaque triangle du maillage.

Ce mode de réalisation de modèles numériques tridimensionnels est efficace pour des objets de formes simples. En revanche, pour les objets ayant des formes complexes, la difficulté est de déterminer quels triangles appartiennent à la surface de l'objet et quels triangles n'appartiennent pas à celles-ci. Les triangles appartenant à la surface de l'objet sont alors définis comme opaques, ils seront visibles, tandis que les triangles n'appartenant pas à cette surface sont définis comme transparents, ils seront donc invisibles. La détermination de l'opacité des triangles est effectuée par un algorithme de croissance de région mais est bien souvent imparfaite, à moins d'une intervention humaine particulièrement longue et fastidieuse, de sorte que les modèles numériques tridimensionnels d'objets de forme complexe présentent souvent des défauts.

OBJET DE L'INVENTION

L'invention a notamment pour but de fournir un modèle numérique tridimensionnel présentant relativement peu de défauts en limitant les ressources de calcul nécessaires à la modélisation.

RESUME DE L'INVENTION

A cet effet, on prévoit, selon l'invention un procédé de numérisation numérique d'une surface tridimensionnelle, comprenant les étapes de : déterminer des coordonnées de points sur la surface tridimensionnelle pour obtenir un nuage de points et capturer des images de la surface tridimensionnelle depuis une pluralité de points de vue, construire par tétraédrisation un maillage de triangles sur le nuage de points, projeter le maillage sur les images et déterminer simultanément un paramètre d'opacité et un paramètre de texture des triangles en faisant coïncider au moins une partie des images et le maillage afin d'obtenir une ébauche de modèle tridimensionnel, comparer l'ébauche de modèle tridimensionnel aux images et vérifier une cohérence entre l'ébauche de modèle tridimensionnel et les images, revenir à la détermination des paramètres d'opacité et de texture des triangles si la cohérence est inférieure à une cohérence attendue, extraire la surface de l'ébauche de modèle pour former le modèle tridimensionnel dans le cas contraire.

La projection des triangles sur les images et la détermination de la texture permettent de déterminer si un triangle appartient à la surface visible de l'objet selon la direction d'observation. On note que, comme les images de la surface tridimensionnelle sont prises depuis une pluralité de points de vue, la pluralité d'images capturées depuis la pluralité de points de vue (et donc selon des directions d'observation différentes) fournit une information tridimensionnelle de la surface tridimensionnelle. La comparaison de l'ébauche de modèle tridimensionnel à la pluralité d'images permet de tenir compte de cette information tridimensionnelle et in fine de faire coïncider, par itérations successives, l'ébauche de modèle tridimensionnel et lesdites images afin de converger vers un modèle final représentatif de la surface de l'objet telle qu'elle apparait sur lesdites images. Ainsi, alors que les images ne sont traditionnellement utilisées que pour fournir la texture du modèle, le procédé de l'invention exploite les images prises depuis une pluralité de points de vue également pour la détermination de l'opacité des triangles en effectuant des itérations détermination des paramètres de texture et opacité pour obtenir une ébauche de modèle tridimensionnel / vérification de la cohérence entre l'ébauche de modèle tridimensionnel ainsi obtenue et les images. Ceci permet d'améliorer rapidement et facilement la précision du maillage et donc de limiter le nombre de défauts du modèle final.

Selon des caractéristiques optionnelles, utilisées individuellement ou tout ou partie en combinaison :

- le procédé comprend une opération d'ordonnancement des triangles, selon au moins une direction d'observation et depuis une position d'observation, pour chaque pixel de chaque image et un calcul d'opacité pour chacun desdits pixels ;
- l'opacité est une fonction sigmoïde variant entre $-\infty$ et $+\infty$ ;
- la tétraédrisation comprend l'opération de déterminer une boîte englobante autour du nuage de points et l'opération de construire des tétraèdres sur le nuage de points depuis chaque angle de la boîte englobante ;
- le procédé comprend une boucle pour revenir à la détermination des paramètres d'opacité et de texture des triangles si la cohérence est inférieure à une cohérence attendue, la boucle mettant en œuvre une méthode de rétropropagation de gradient pour faire converger de manière itérative les paramètres d'opacité et texture des triangles vers une configuration optimale ;
- la comparaison de l'ébauche de modèle aux images donne lieu au calcul d'un score de cohérence ;
- le score de cohérence est par exemple une erreur calculée entre l'ébauche de modèle et les images par la méthode des moindres carrés ;
- lorsque les erreurs sont accumulées sur une série de plusieurs images, une procédure d'optimisation est utilisée pour adapter les paramètres des triangles afin de minimiser l'erreur par les moindres carrés ;
- le procédé comprend l'étape de mettre en œuvre une heuristique externe pour éliminer les triangles du maillage triangulaire les moins susceptibles d'appartenir à la surface tridimensionnelle, l'heuristique faisant intervenir les conditions d'obtention du nuage de points et au moins une caractéristique des triangles.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

[Fig. 1] est une vue schématique d'un exemple d'installation permettant la mise en œuvre du procédé de l'invention ;
[Fig. 2] est un schéma-bloc illustrant le procédé de l'invention ;
[Fig. 3] est une vue en perspective d'un nuage de points dont les positions ont été déterminées à la surface d'une des ailes de la Victoire de Samothrace ;
[Fig. 4] est une vue en perspective d'une ébauche de maillage obtenue à partir de ce nuage de points (même angle de vue que la figure 3) ;

[Fig. 5] est une vue en perspective illustrant la finalisation du maillage (même angle de vue que la figure 4) ;
[Fig. 6] est une vue en perspective de l'ébauche de maillage obtenue à partir du nuage de points de la figure 3 mais sous un angle de vue différent de celui de la figure 4 ;

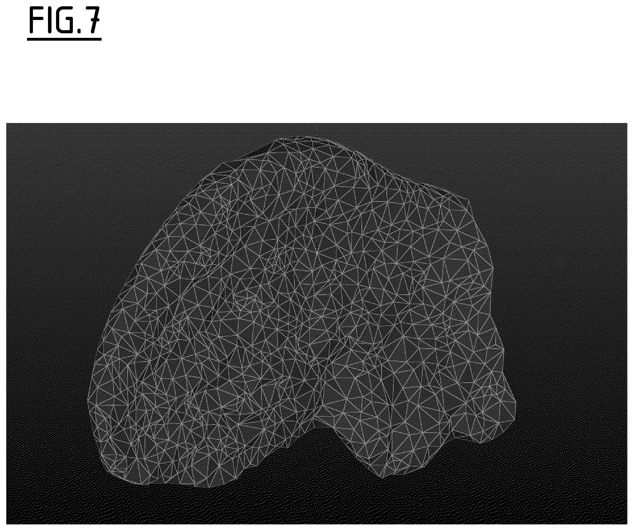

[Fig. 7] est une vue en perspective du maillage final (même angle de vue que la figure 6).

DESCRIPTION DETAILLEE DE L'INVENTION

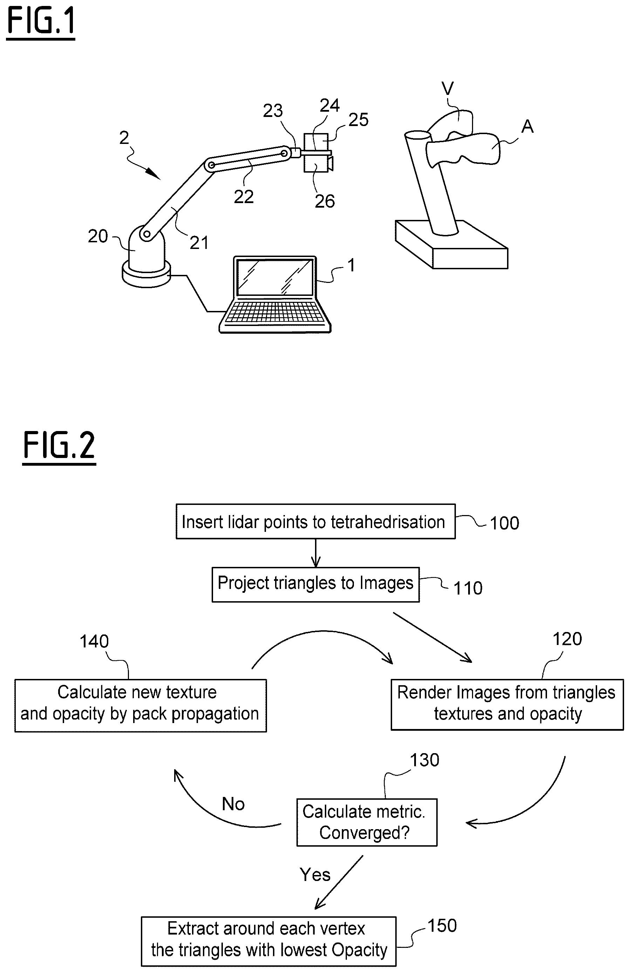

L'invention s'inscrit dans un procédé de création d'un modèle numérique tridimensionnel représentatif d'un objet, ici la partie terminale d'une des ailes de la statue appelée la Victoire de Samothrace et conservée au musée du Louvre (la statue et l'aile sont symbolisées en V et A sur la figure 1). On rappelle que, à la fin de la mise en œuvre du procédé selon l'invention, le modèle numérique tridimensionnel doit pouvoir être observé selon un grand nombre d'axes ou directions d'observation (ce qu'on appelle plus loin les directions d'observation envisageables).

En référence à la figure 1, le procédé selon l'invention est mis en œuvre au moyen d'une installation comprenant un ordinateur 1 et un bras de mesure tridimensionnelle 2 connecté à l'ordinateur 1.

Le bras de mesure tridimensionnelle 2 comprend ici une base 20, un premier segment 21 articulé sur la base 20, un deuxième segment 22 articulé sur le premier segment 21, un poignet 23 articulé sur le deuxième segment 22. Le poignet 23 est pourvu d'une platine porte-accessoire 24 sur laquelle sont fixés un émetteur/récepteur laser 25 de type LIDAR et un dispositif de capture d'images 26 de type caméra qui pointent tous les deux dans la même direction. Chaque axe d'articulation du bras de mesure tridimensionnelle 2 est pourvu d'un codeur angulaire connecté à un premier bus relié à l'ordinateur 1. Les codeurs angulaires transmettent à l'ordinateur 1 des signaux représentatifs de positions angulaires relatives des éléments du bras entre lesquels ils sont disposés.

L'émetteur/récepteur laser 25 et le dispositif de capture d'images 26 sont connectés à un deuxième bus relié à l'ordinateur 1. L'émetteur/récepteur laser 25 transmet à l'ordinateur 1 des signaux représentatifs de mesures de distance entre l'émetteur/récepteur laser 25 et des points de l'aile A vers lequel l'émetteur/récepteur laser 25 est pointé. Le dispositif de capture d'images 26 transmets à l'ordinateur 1 des signaux représentatifs d'images de l'aile A capturées en même temps que les mesures de distance fournies par l'émetteur/récepteur laser 25. L'ordinateur 1 exécute un programme agencé pour mettre en œuvre le procédé de l'invention.

L'ordinateur 1 est programmé de manière connue en elle-même pour pouvoir calculer à chaque instant la position de la platine porte-accessoire 24 à partir des signaux fournis par les codeurs angulaires et en déduire, dans un repère de référence, des coordonnées des points de l'aile A pour lesquels une mesure de distance a été effectuée et l'orientation de la platine porte-accessoire 24 pour chaque mesure/capture d'image.

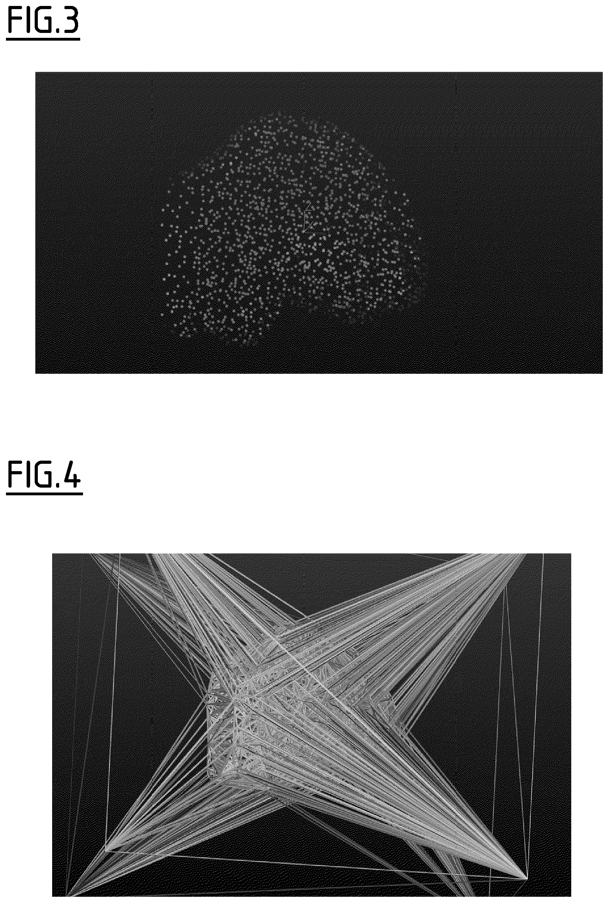

Le bras de mesure tridimensionnelle 2 va être manipulé et commandé par un opérateur pour tourner autour de l'aile A et prendre des mesures d'une pluralité de points répartis sur toute la surface de l'aile A. En parallèle, des photographies sont également capturées et enregistrées avec les coordonnées du point depuis lequel chaque photographie a été prise (point de prise de vue) et l'axe selon lequel chaque photographie a été prise (axe de prise de vue). L'ordinateur 1 enregistre l'ensemble de ces données pour obtenir un nuage de points tel que celui représenté sur la figure 3.

On comprend que, à ce stade de la mise en œuvre du procédé, on dispose du nuage de points et de photographies dont on connaît le point de prise de vue et l'axe de prise de vue. Le procédé selon l'invention vise à la création d'un modèle tridimensionnel qui pourra être observé selon différents angles y compris des angles pour lesquels on n'a pas de photographies.

A partir de ce nuage de points, le programme de l'ordinateur 1 construit un maillage polygonal (étape 100 du logigramme de la figure 2). Le programme exécuté par l'ordinateur 1 met plus précisément en œuvre un algorithme classique de tétraédrisation pour la construction d'un maillage de tétraèdres sur le nuage de points. On rappelle qu'un tétraèdre est un polyèdre à quatre faces triangulaires et que, dans un maillage de tétraèdres respectant la condition de Delaunay, tous les points du nuage de points sont des sommets de tétraèdres de telle manière que la sphère circonscrite à chacun des tétraèdres soit vide, c'est-à-dire ne contienne aucun des points du nuage de points.

La tétraédrisation comprend l'opération de déterminer une boîte englobante autour du nuage de points et l'opération de créer des tétraèdres sur le nuage de points (compris les angles de la boîte englobante).

On comprend que les points du nuage de points forment les sommets des faces triangulaires des tétraèdres issus de la tétraédrisation et permettent d'obtenir un maillage triangulaire (voir la figure 4). En variante, on peut réaliser un échantillonnage des points de sorte que tous les points ne sont dans le maillage.

Le maillage triangulaire est ensuite projeté sur les images (étape 110). La projection réalisée, connue en elle-même, est une simple projection d'un espace tridimensionnel sur un plan (le plan de chaque photographie) selon la normale au plan. Ceci est particulièrement aisé pour des photographies prises avec un objectif standard ou un téléobjectif. Ceci dit, il est également connu des projections permettant de projeter des espaces tridimensionnels sur des photographies prises avec des objectifs très grand angle ou hyper-gones (par exemple un objectif de type *fisheye).*

Il y a forcément des triangles qui n'appartiennent pas à la surface de l'aile A et le procédé de l'invention prévoit de préférence l'étape de mettre en œuvre une heuristique externe pour éliminer les triangles du maillage triangulaire les moins susceptibles d'appartenir à la surface tridimensionnelle, l'heuristique faisant intervenir les conditions d'obtention du nuage de points et au moins une caractéristique des triangles. La mise en œuvre de l'heuristique externe permet de réduire le nombre de triangles éligibles (c'est-à-dire susceptibles d'appartenir à la surface de l'aile A) pour affiner la constitution du maillage triangulaire. Par exemple, si on a mesuré des points sur deux faces opposées de l'aile A, tous les triangles entre les deux faces n'ont aucune raison d'exister et seront donc éliminés. Selon un autre exemple, si on a mesuré sur la surface de l'aile A des points tous les centimètres, tous les triangles dont les côtés ayant une longueur supérieure à un seuil (par exemple deux centimètres) sont éliminés. L'heuristique externe ainsi mise en place est avantageuse car elle permet de gagner du temps.

Une fois éliminés les triangles non éligibles pour appartenir à la surface de l'aile A, la projection est utilisée pour attribuer à chaque triangle une valeur d'un paramètre d'opacité et une valeur d'un paramètre de texture (étape 120) comme on va le voir maintenant.

Au préalable, le programme de l'ordinateur 1 a établi, pour chaque pixel (ou élément d'image) de chaque image, une liste ordonnée de tous les triangles qui sont traversés par une des directions d'observation correspondant à chaque direction de prise de vue d'une des photographies. On comprend qu'il existe, pour chaque pixel et chaque direction d'observation, au moins deux triangles : l'un situé sur la face avant de l'aile A et l'autre situé sur la face arrière de l'aile A. L'ordinateur 1 va alors déterminer l'ordre selon lequel les triangles sont traversés en suivant la direction d'observation depuis l'observateur théorique (l'appareil de prise de vue) situé à l'origine de cette direction d'observation (l'axe de prise de vue). Cet ordonnancement va être utilisé pour déterminer l'opacité de chaque triangle étant entendu que l'opacité maximale est théoriquement attribuée au premier triangle traversé par la direction d'observation (ou triangle de rang 1, celui qui est le plus près de l'observateur théorique et est donc visible par ledit observateur selon cette direction d'observation). On comprend que l'ordre des triangles est lié à la géométrie de l'aile A. L'opacité, couramment notée $\alpha$, est une valeur numérique comprise entre 0 (opaque) et 1 (transparent). De préférence, l'opacité est définie par une fonction sigmoïde variant entre $-\infty$ et $+\infty$. On détermine ainsi dans quelle mesure chacun des triangles contribue à chaque pixel en fonction de son opacité.

Le paramètre de texture reflète lui la couleur c du triangle et dépend de la couleur du triangle lui-même (qui est au premier plan et est notée $c_f = c_N^{eff}$) mais également de la couleur d'arrière-plan, c'est-à-dire le mélange des couleurs de tous les triangles visibles par transparence derrière le triangle en question. On comprend donc que chaque triangle de rang i peut être ainsi défini par l'une et/ou l'autre des valeurs suivantes :

$$c_i^{eff} = (\alpha_i \ c_i \ + (1 - \alpha_i \ )c_i^{eff}\alpha_{i-1}^{eff}) /\alpha_i^{eff}$$

$$\alpha_i^{eff} = \alpha_i \ + (1 - \alpha_i \ )\alpha_{i-1}^{eff}$$

dans lesquelles $\alpha_i$ et $c_i$ sont respectivement les paramètres d'opacité et de couleur des triangles. On notera que, avec une paramétrisation en sigmoïde, le facteur $(1-\alpha_i)$ ne peut jamais être négatif. En appliquant cette relation de manière récursive du dernier triangle vers le premier triangle visible on peut établir une visibilité effective par triangle depuis un pixel et calculer la couleur/opacité finale $c_N^{eff}, \alpha_N^{eff}$ du pixel rendu par la représentation volumique après avoir traversé N triangles. Il est à noter que pour ce calcule une librairie de différentiation automatique est utilisé pour faciliter la back-propagation (on pourrait aussi établir les dérives $\frac{\partial c_N^{eff}}{\partial \alpha_i}, \frac{\partial c_N^{eff}}{\partial c_i}, \frac{\partial \alpha_N^{eff}}{\partial \alpha_i}$ a la main). Il est à mentionner qu'il existe des variants du alpha composing et que tout méthode de rendu qui est différentiable et comporte un aspect d'opacité pourrait être utilise a la place.

Cette technique porte le nom anglais « alpha compositing » et est connue en elle-même par exemple du document HANRAHAN Pat, Image Compositing, CS148 Introduction to Computer Graphics and Imaging, Lecture 14, hiver 2009 (https://graphics.stanford.edu/courses/cs148-09/lectures/imaging.pdf) ou du document https://en.wikipedia.org/wiki/Alpha_compositing.

Le procédé comprend une phase d'initialisation et une phase d'optimisation visant à faire converger de manière itérative les paramètres d'opacité et texture des triangles vers une configuration optimale.

Lors de l'étape 120, l'ordinateur 1 plaque sur chaque triangle la ou les images correspondant à chaque triangle pour modifier les paramètres de texture et d'opacité de chaque triangle.

Lors de la mise en œuvre de l'étape 120 en phase d'initialisation, une même valeur de paramètre de texture va être appliquée à tous les triangles traversés par une même direction d'observation ou à tous les triangles couverts par une même image : par exemple tous les triangles sont verts ou alors tous les triangles sont rouges. En variante, pour augmenter la vitesse de convergence des paramètres de texture vers une configuration optimale lors de la phase d'optimisation, le programme en phase d'initialisation calcule une moyenne des textures des images couvrant un même triangle et applique cette moyenne à la valeur de paramètre de texture de ce triangle. Toute autre valeur arbitraire pourrait néanmoins être utilisée en phase d'initialisation.

De la même manière, lors de la mise en œuvre de l'étape 120 en phase d'initialisation, une même valeur de paramètre d'opacité va être appliquée à tous les triangles : par exemple, la valeur de paramètre d'opacité est fixée à 0,5 car ce sera plus proche de la réalité que d'avoir tous les triangles transparents ou opaques. Le choix d'une telle valeur intermédiaire permet de faire converger plus rapidement les paramètres d'opacité vers une configuration optimale lors de la phase d'optimisation et donc d'aboutir plus rapidement au modèle tridimensionnel. Néanmoins, d'autres possibilités existent. Par exemple, la valeur du paramètre d'opacité choisie initialement pour chaque triangle dépend de la taille du triangle : plus un triangle est petit, plus il y a des points dans la zone où ce triangle se trouve et plus il y a de chance que ce triangle soit visible. On pourrait également choisir une valeur arbitraire.

A l'étape 120, le programme de l'ordinateur 1 a donc affecté à chaque triangle une valeur pour le paramètre d'opacité et une valeur pour le paramètre de texture.

On obtient ainsi un rendu du maillage formant une ébauche de modèle.

L'ébauche de modèle est ensuite comparée aux images et un score de cohérence est calculé entre l'ébauche de modèle et les images (étape 130). Ce score de cohérence est par exemple une différence calculée par la méthode des moindres carrés ou MSE (de l'anglais *mean square error*) et est ensuite comparé à un seuil prédéterminé correspondant à une cohérence acceptable qui dépend de la précision du modèle tridimensionnel qu'on souhaite obtenir.

L'ébauche résultant d'une phase d'initialisation, le score de cohérence est inférieur au seuil prédéterminé et le programme entame la phase d'optimisation en débutant une boucle (140) pour revenir à la détermination d'opacité/texture (étape 120).

La phase d'optimisation est agencée pour modifier à la fois le paramètre de texture et le paramètre d'opacité des triangles : l'idée est d'obtenir des valeurs des paramètres de texture et d'opacité de chaque triangle telles que l'ébauche de modèle recouvre au mieux les images.

La boucle met en œuvre une méthode de rétropropagation de gradient (*backpropagation* en anglais ; l'utilisation d'une telle boucle dans le domaine du traitement d'image est connue, par exemple en application sur des variables de gaussiennes dans la méthode dite *Gaussian Splatting*) et corrige les paramètres de chaque triangle selon l'importance de la contribution de chaque triangle à un pixel. Cette méthode permet de faire converger de manière itérative les paramètres d'opacité et texture des triangles vers une configuration optimale. Cela revient à rechercher un minimum à une fonction de coût. La méthode de rétropropagation de gradient est ici mise en œuvre par des programmes informatiques de différentiation automatique tels que ceux présents dans la bibliothèque logicielle du système informatique d'apprentissage automatique profond TORCH. Lorsque les erreurs sont accumulées sur une série de plusieurs images, il est possible d'utiliser une procédure d'optimisation pour adapter les paramètres des triangles afin de minimiser l'erreur par les moindres carrés.

A l'étape 120, le programme de l'ordinateur 1 a donc affecté à chaque triangle une nouvelle valeur pour le paramètre d'opacité et une nouvelle valeur pour le paramètre de texture. On peut donc déterminer pour chaque pixel et selon chaque direction d'observation une valeur c.

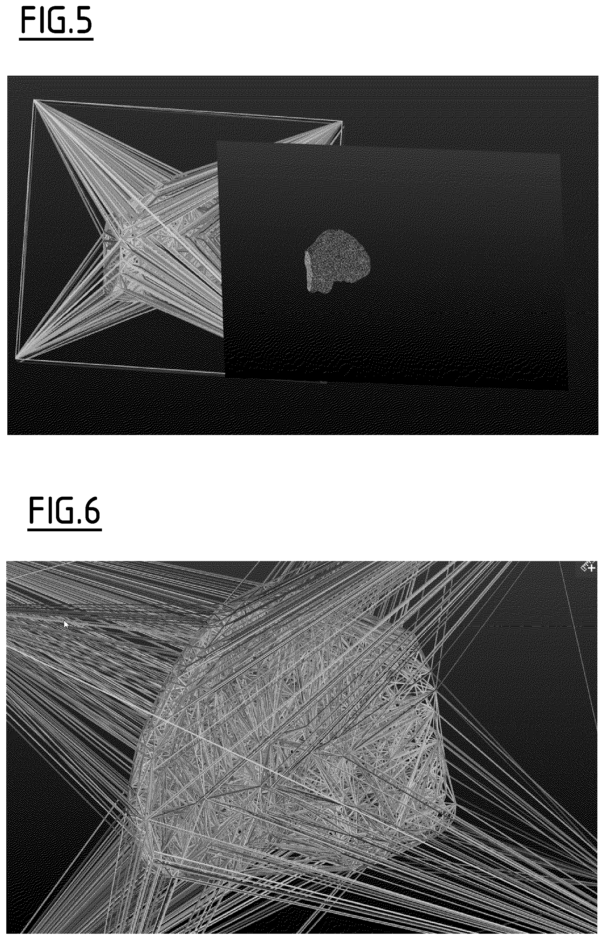

On obtient ainsi un rendu du maillage formant une nouvelle ébauche de modèle : sur la figure 5, on peut voir, sur la partie gauche, le maillage en cours de réalisation et, sur la partie droite, l'ébauche de modèle.

L'ébauche de modèle est ensuite comparée aux images et le score de cohérence est calculé entre l'ébauche de modèle et les images (étape 130).

Si le score de cohérence est inférieur au seuil prédéterminé, le programme emprunte la boucle (140) pour revenir à la détermination d'opacité/texture (étape 120) pour modifier une nouvelle fois le paramètre de texture et le paramètre d'opacité des triangles.

On comprend que dans le procédé de l'invention, les sommets des triangles et les triangles eux-mêmes restent les mêmes ; seuls les paramètres d'opacité et de texture seront modifiés.

Lorsque le score de cohérence atteint le seuil prédéterminé, on extrait la surface de l'ébauche de modèle en choisissant les triangles ayant l'opacité la plus élevée (étape 150), i.e. la valeur de paramètre d'opacité la plus faible, et cette surface devient le modèle numérique tridimensionnel de l'aile A.

On notera que le procédé de l'invention combine des techniques de rendu (ou *rendering*) connues comme la tétraédrisation et autre rastérisation, le lancer de rayon (ou *ray tracing*), l'application de texture (ou *texture map-ping*), l'*alpha compositing...*

Bien entendu, l'invention n'est pas limitée au mode de réalisation décrit mais englobe toute variante entrant dans le champ de l'invention telle que définie par les revendications.

En particulier, l'installation pour la mise en œuvre du procédé de l'invention peut être différente de celle décrite.

Une partie des traitements peut être faite dans le bras ou au contraire tous les traitements sont effectués dans l'ordinateur 1.

Le bras de mesure tridimensionnelle peut être remplacé par tout moyen permettant de déterminer des coordonnées de points sur la surface, par contact ou sans contact. Il est par exemple possible d'utiliser un lidar portable qui incorpore des moyens de détection de sa propre position (centrale inertielle par exemple) ou qui est associé à des moyens de suivi (ou *tracking*).

Les photographies peuvent être prises en même temps que les mesures de distance ou à un autre moment. Il faut juste savoir depuis quel point a été prise chacune des photographies. Les photographies peuvent être capturées en mettant en œuvre un procédé photogrammétrique d'imagerie par intervalle SFR (de l'anglais *structure from motion*). On pourrait avoir un bras de mesure tridimensionnelle et un support dédié pour un appareil de capture d'image dont on connaît à chaque prise de vue la position dans un repère commun avec le bras de mesure tridimensionnelle.

Le paramètre de texture peut comprendre une ou plusieurs valeurs, ou renvoyer à un atlas de textures auquel l'ordinateur 1 a accès.

La méthode des moindres carrés n'est pas obligatoire et toute autre méthode permettant de parvenir à une vérification de cohérence est utilisable, comme par exemple une méthode de minimisation d'entropie.

Comme il peut être difficile de définir un seuil correspondant à une cohérence suffisante entre les images et l'ébauche de modèle, on peut vérifier cette cohérence en utilisant une autre méthode.

Dans le procédé de l'invention, lors de la phase d'initialisation, on peut choisir l'opacité puis projeter la texture pour avoir une meilleure initialisation de la texture ou, à l'inverse, choisir la texture puis projeter l'opacité pour avoir une meilleure initialisation de l'opacité.

## Revendications

1. Procédé de modélisation numérique d'une surface tridimensionnelle, comprenant les étapes de : déterminer des coordonnées de points sur la surface tridimensionnelle pour obtenir un nuage de points et capturer des images de la surface tridimensionnelle depuis une pluralité de points de vue, construire par tétraédrisation un maillage de triangles sur le nuage de points, projeter le maillage sur les images et déterminer simultanément un paramètre d'opacité et un paramètre de texture des triangles en faisant coïncider au moins une partie des images et le maillage afin d'obtenir une ébauche de modèle tridimensionnel, comparer l'ébauche de modèle tridimensionnel aux images et vérifier une cohérence entre l'ébauche de modèle tridimensionnel et les images, revenir à la détermination des paramètres d'opacité et de texture des triangles si la cohérence est inférieure à une cohérence attendue, extraire la surface de l'ébauche de modèle pour former le modèle tridimensionnel dans le cas contraire.

2. Procédé selon la revendication 1, dans lequel la détermination des paramètres d'opacité et de texture comprend une opération d'ordonnancement des triangles, selon au moins une direction d'observation et depuis une position d'observation, pour chaque pixel de chaque image et un calcul d'opacité pour chacun desdits pixels telle que

$$\alpha_i^{eff} = \alpha_i \ + (1 - \alpha_i\ )\alpha_{i-1}^{eff}$$

avec $\alpha_i^{eff}$ l'opacité finale du pixel après avoir traversé i triangles et $\alpha_i$ l'opacité du pixel du triangle i.

**3.** Procédé selon la revendication 2, dans lequel l'opacité est une fonction sigmoïde variant entre -∞ et +∞.

**4.** Procédé selon l'une quelconque des revendications précédentes, dans lequel la tétraédrisation comprend l'opération de déterminer une boîte englobante autour du nuage de points et l'opération de construire des tétraèdres sur le nuage de points depuis chaque angle de la boîte englobante.

**5.** Procédé selon l'une quelconque des revendications précédentes, comprenant une boucle pour revenir à la détermination des paramètres d'opacité et de texture des triangles si la cohérence est inférieure à une cohérence attendue, la boucle mettant en œuvre une méthode de rétropropagation de gradient pour faire converger de manière itérative les paramètres d'opacité et texture des triangles vers une configuration optimale.

**6.** Procédé selon la revendication 5, dans lequel la comparaison de l'ébauche de modèle aux images donne lieu au calcul d'un score de cohérence.

**7.** Procédé selon la revendication 6, dans lequel le score de cohérence est par exemple une erreur calculée entre l'ébauche de modèle et les images par la méthode des moindres carrés.

**8.** Procédé selon la revendication 7, dans lequel lorsque les erreurs sont accumulées sur une série de plusieurs images, une procédure d'optimisation est utilisée pour adapter les paramètres des triangles afin de minimiser l'erreur par les moindres carrés.

**9.** Procédé selon l'une quelconque des revendications précédentes, comprenant l'étape de mettre en œuvre une heuristique externe pour éliminer les triangles du maillage triangulaire les moins susceptibles d'appartenir à la surface tridimensionnelle, l'heuristique faisant intervenir les conditions d'obtention du nuage de points et au moins une caractéristique des triangles.

# FIG.1

# FIG.2

Insert lidar points to tetrahedrisation — 100

Project triangles to Images — 110

140
Calculate new texture
and opacity by pack propagation

120
Render Images from triangles
textures and opacity

130
Calculate metric.
Converged?

No

Yes

150
Extract around each vertex
the triangles with lowest Opacity

# FIG.3

# FIG.4

# FIG.5

# FIG.6

FIG.7

Europäisches
Patentamt

European
Patent Office

Office européen
des brevets

# RAPPORT DE RECHERCHE EUROPEENNE

**Numéro de la demande**

EP 25 19 0523

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/146971 A1 (ROBERT LUC FRANCK [FR] ET AL) 28 mai 2015 (2015-05-28) | 1,3,5-9 | INV.<br>G06T15/04 |
| A | * abrégé; figures 3,4 *<br>* alinéa [0004] *<br>* alinéas [0048] - [0051] *<br>----- | 2 | G06T17/20<br>G06T7/50 |
| A | ZHOU QIAN-YI ET AL: "Color map optimization for 3D reconstruction with consumer depth cameras",<br>ACM TRANSACTIONS ON GRAPHICS, ACM, NY, US, vol. 33, no. 4,<br>27 juillet 2014 (2014-07-27), pages 1-10,<br>XP059140058,<br>ISSN: 0730-0301, DOI:<br>10.1145/2601097.2601134<br>* abrégé *<br>* sections 3, 4, 5 *<br>----- | 1-3,5-9 | |

**DOMAINES TECHNIQUES RECHERCHES (IPC)**

G06T

Le présent rapport a été établi pour toutes les revendications

| Lieu de la recherche | Date d'achèvement de la recherche | Examinateur |
|---|---|---|
| La Haye | 23 juillet 2025 | Bouchaâla, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

EPO FORM 1503 03.82 (P04C02)

Europäisches
Patentamt

European
Patent Office

Office européen
des brevets

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-3, 5-9

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION
FEUILLE SUPPLÉMENTAIRE B**

Numéro de la demande

EP 25 19 0523

La division de la recherche estime que la présente demande de brevet européen ne satisfait pas à l'exigence relative à l'unité d'invention et concerne plusieurs inventions ou pluralités d'inventions, à savoir :

1. revendications: 1-3, 5-9

Dans le cadre de la modélisation de la revendication 1, détails de détermination conjointe des paramètres de texture et d'opacité des triangles

1.1. revendication: 9

Dans le cadre de la modélisation de la revendication 1, élimination des triangles du maillage ne faisant pas partie de la surface tridimensionnelle
---

2. revendication: 4

Dans le cadre de la modélisation de la revendication 1, détails de construction du maillage de triangles par tétraédrisation
---

Prière de noter que toutes les inventions mentionnées sous point 1, qui ne sont pas nécessairement liées par un concept inventif commun, ont pu être recherchées sans effort particulier justifiant une taxe additionnelle.

EPO FORM P0402

**EP 4 682 836 A1**

## ANNEXE AU RAPPORT DE RECHERCHE EUROPEENNE
## RELATIF A LA DEMANDE DE BREVET EUROPEEN NO.

EP 25 19 0523

23-07-2025

| Document brevet cité au rapport de recherche | Date de publication | Membre(s) de la famille de brevet(s) | Date de publication |
|---|---|---|---|
| US 2015146971 A1 | 28-05-2015 | AUCUN | |

EPO FORM P0460